# EUROPÄISCHE PATENTANMELDUNG

(11) **EP 1 146 297 A1**
(43) Veröffentlichungstag der Anmeldung: **17.10.2001**
(21) Anmeldenummer: 01810334.1
(22) Anmeldetag: 03.04.2001
(51) Int. Cl.: F24J 2/46, H01L 31/042

(54) **Profil und Rahmen zum Einfassen von Solarpanels**

(30) Priorität: 14.04.2000 CH 7522000
(71) Anmelder: Fabrisolar AG, 8700 Küsnacht (CH)
(72) Erfinder: Leu, Sylvère, 8824 Schönenberg (CH); Maag, Willi, 8700 Küsnacht (CH)
(74) Vertreter: Felber, Josef

(57) **Zusammenfassung**

Das Profil (12) weist am oberen Ende seines hier sichtbaren Schenkels eine gegen die Innenseite des Winkelprofils hin gewandte L-förmige Schulter zum Tragen des unteren Randes des Solarpanels (9) auf. Derjenige Schenkel (13) dieser L-förmigen Schulter, welcher an die Stirnseite des Solarpanelrandes anzuliegen bestimmt ist, ist dabei kürzer oder höchstens gleichlang wie die Stärke des einzufassenden Solarpanels (9), sodass er dessen Oberfläche nicht überragt. Die anderen Profile (6) des Rahmens sind mit U-förmigen Nuten ausgerüstet, in welche die Ränder des Solarpanels (9) eingelegt werden, sodass diese allseitig umfasst werden. Dieser Rahmen gewährleistet bei schräg aufgestellten Solarpanels (9), dass das Regenwasser ungehindert abfliessen kann und an der unteren Rahmenseite keine Rinne mehr gebildet wird, in welcher sich Regenwasser ansammeln kann, welches sonst eine schleichende Verschmutzung des Panels (9) von unten her verursacht.

## Beschreibung

Die vorliegende Erfindung betrifft ein Profil und einen Rahmen für das Einfassen von Solarpanels. Solche Solarpanels bestehen meist aus einer Glasscheibe aus 3mm starkem Einscheiben-Sicherheitsglas ESG vom Typ extraweiss. Auf der Rückseite dieser Glasscheibe sind die photoelektrischen Solarzellen aufgebracht. Diese werden nebeneinander angeordnet auf die Glasscheibe aufgebracht und mit Aetylen-Vinyl-Acetat von einer Schichtdecke von 50µ bis 70µ eingegossen, welche noch von einer teflonartigen Schicht Tedlar™ überzogen ist. Durch Wärmeeinwirkung auf einer Temperatur von 150°C erfolgt eine Polymerisation, das heisst es entstehen längere Polymere (Molekülketten), wodurch die Solarzellen auf der Glasscheibe aufkaschiert und eingegossen werden. Da diese Solarpanels infolge des Baumaterials und ihres Aufbaus recht verletzlich sind, dürfen sie bloss um ca. ¹/₇₀ ihrer Gesamtlänge durchgebogen werden. Um diese Solarpanels geschützt und sicher im Freien zu montieren, werden sie in einen rundum verlaufenden Aluminiumrahmen montiert. Dieser Aluminiumrahmen ist ca. 30-50mm stark und somit recht verwindungsstabil. Das für den Rahmen verwendete Aluminium-Winkelprofil weist auf seiner Innenseite eine U-förmige Nut auf, in welche der Rand des Solarpanels einpasst. Ausserdem verlaufen längs der Profil-Innenseite zwei Rundnuten, die einen Längsschlitz aufweisen, sodass gewissermassen zwei Schenkel gebildet werden, die gegeneinander eine gewisse Elastizität aufweisen. An den Stirnseiten können daher Blechschrauben längs in Verlaufrichtung in diese Rundnuten eingeschraubt werden. Dadurch ist es möglich, vier solche Profilabschnitte, die in den Ecken in die Gehrung oder sonst in geeigneter Weise für eine Passgenauigkeit in der Ecke zugeschnitten sind, miteinander fest zu verschrauben, sodass der so gebildete viereckige Rahmen die geforderte hohe Verwindungsstabilität erhält. Der Rahmen mit dem darin eingefassten Solarpanel kann dann auf verschiedene Art und Weise an einem Gebäude oder sonst wo im Freien montiert werden. Die Montage erfolgt in Schräglage, damit einerseits das Panel optimal gegen die Sonneneinstrahlung ausgerichtet ist, sodass diese also möglichst senkrecht auf das Solarpanel einstrahlt, und andrerseits das Regenwasser abfliesst.

Nun stellt sich bei den herkömmlich verwendeten Rahmen folgendes Problem: Weil das längs der unteren Seite horizontal verlaufende Rahmenprofil auf seiner Oberseite beim Übergang zur Oberfläche des Solarpanels einen Absatz und somit eine Rinne bildet, bleibt dort ein feiner Streifen Regenwasser oder Schnee liegen. Dieses Regenwasser verdunstet natürlich nach geraumer Zeit. Mit jedem Regen sammelt sich aber erneut etwas Regenwasser in der vom Absatz gebildeten Rinne an. Das bringt mit sich, dass nach einigen Monaten oder Jahren Schmutz in dieser Rinne zurückbleibt. Es handelt sich um Staub, der im Regenwasser enthalten ist oder von ihm gebunden wird und nach der Verdunstung des Regenwassers liegen bleibt. Weil oft etwas Regenwasser in der Rinne liegt, beginnen dort Algen zu wachsen, und deren Wachstum breitet sich mit der Zeit auf der Oberfläche des Solarpanels gegen aufwärts aus, sodass nach einigen Monaten oder Jahren ein bis zu 20cm breiter Streifen längs des unteren Randes des Panels von Schmutz und Algen bedeckt ist. Es versteht sich, dass dadurch die Effizienz des Solarpanels entsprechend eingeschränkt wird. Eine Reinigung der Solarpanel ist indessen enorm aufwendig. Es muss mit speziellen Reinigungsmitteln vorgegangen werden. Vergegenwärtigt man sich, dass auf dem Dach eines grösseren Gebäudes bis zu 1'000 Solarpanels installiert werden, so lässt sich unschwer erkennen, welcher Aufwand mit einer solchen regelmässigen Reinigung verbunden ist.

Die Aufgabe der vorliegenden Erfindung ist es daher, ein Profil und einen Rahmen für das Einfassen von Solarpanels anzugeben, welcher die oben erwähnten Probleme beseitigt, indem eine Verschmutzung der Solarpanels infolge liegenbleibenden Regenwassers oder Schnees zuverlässig verhindert wird.

Diese Aufgabe wird gelöst von einem Profil zum Einfassen der unteren Seite eines Solarpanels, das sich dadurch auszeichnet, dass es ein Winkelprofil ist, welches am Ende seines einen Schenkels eine gegen die Innenseite des Winkelprofils hin gewandte L-förmige Schulter zum Tragen des unteren Solarpanelrandes bildet, wobei derjenige Schenkel, welcher an die Stirnseite des Solarpanelrandes anzuliegen bestimmt ist, kürzer oder höchstens gleichlang ist wie die Stärke des einzufassenden Solarpanels.

Die Aufgabe wird weiter gelöst von einem Rahmen zum Einfassen eines Solarpanels, dessen Rahmen-Profile zum Einfassen der Seitenränder und des oberen Randes gleiche Winkelprofile sind, die an ihrem einen Schenkelende eine gegen die Innenseite des Winkelprofils hin gewandte U-förmige Nut zur Aufnahme des Solarpanelrandes aufweisen, und der sich dadurch auszeichnet, dass das Profil zum Einfassen der unteren Seite eines Solarpanels ein Winkelprofil ist, welches am Ende seines einen Schenkels eine gegen die Innenseite des Winkelprofils hin gewandte L-förmige Schulter zum Tragen des unteren Solarpanelrandes bildet, wobei derjenige Schenkel, welcher an die Stirnseite des Solarpanelrandes anzuliegen bestimmt ist, kürzer oder höchstens gleichlang ist wie die Stärke des einzufassenden Solarpanels.

In den Zeichnungen werden die Profiltypen und der daraus aufgebaute Rahmen im einzelnen gezeigt und in der nachfolgenden Beschreibung wird die Funktion dieser Profile und des Rahmens erläutert.

Es zeigt:
- Figur 1:: Ein mit herkömmlichen Rahmenprofilen eingefasstes Solarpanel in Schräglage montiert bzw. aufgestellt;

- Figur 2:: Einen Querschnitt durch das herkömmliche Profil mit U-förmiger Nut zur Aufnahme des Solarpanelrandes;
- Figur 3:: Einen Querschnitt durch das erfindungsgemässe Profil mit L-förmiger Schulter zur Aufnahme des unteren Solarpanelrandes;
- Figur 4:: Eine Ansicht der unteren Rahmenecke von der Seite her gesehen, in zusammengebautem Zustand;
- Figur 5:: Eine perspektivische Ansicht der unteren Rahmenecke eines erfindungsgemässen Rahmens mit darin eingefasstem Solarpanel.

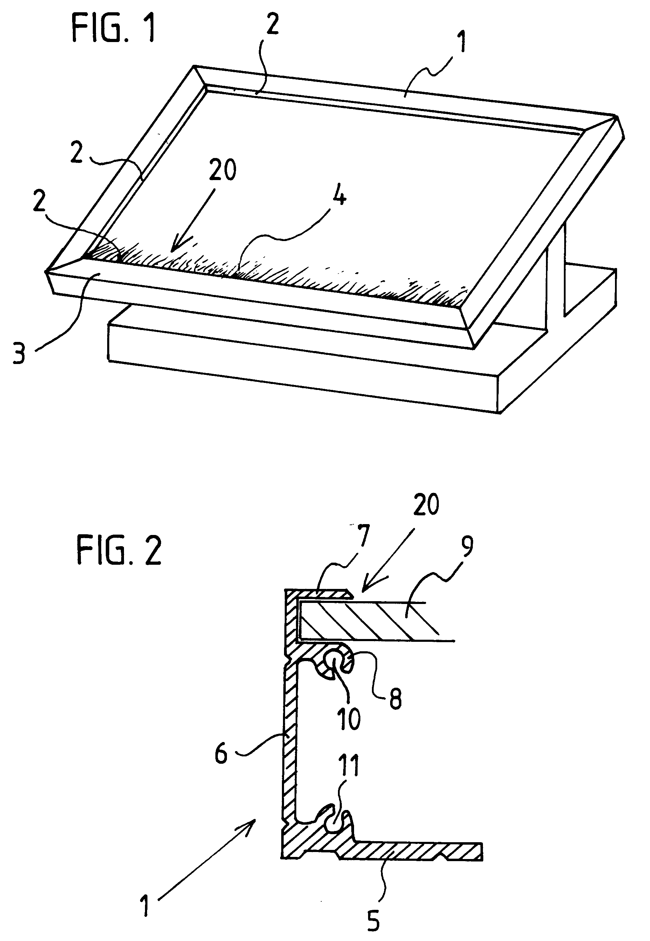

Die Figur 1 zeigt ein in herkömmlicher Weise eingefasstes Solarpanel 9, wie es etwa auf einem Flachdach aufgestellt oder montiert wird. Der Rahmen 1 besteht aus rundum verlaufenden Winkelprofilen von durchwegs gleichem Querschnitt, welche an den Enden der hier in einer Ebene liegenden Schenkel auf deren Unterseite je eine U-förmige Nut aufweisen, in welche die Ränder des Solarpanels 9 eingelegt sind. Wie man sieht, ist durch die allseitige Umfassung des Solarpanelrandes je eine zur Solarpanel-Oberfläche senkrecht verlaufende Stirnseite 2 bedingt. Diese Stirnseiten 2 sind dem Zentrum der Solarpanels und somit einander zugewandt sind. Durch die Solarpanel-Oberfläche längs des unteren Randes des Solarpanels 9 einerseits und die Stirnseite 2 des unteren, horizontal verlaufenden Profils 3 andrerseits wird eine Rinne 20 gebildet. Regnet es auf das Solarpanel 9, so füllt das Regenwasser diese Rinne 20 und fliesst danach über das untere horizontal verlaufende Profil 3 ab. Ein Rest Regenwasser bleibt aber unweigerlich in dieser Rinne 20 liegen. Mit der Zeit wachsen in dieser Rinne 20 Algen und es setzt sich Staub und Schmutz fest. Diese Verschmutzung und dieses Algenwachstum erstreckt sich mit der Zeit immer weiter auf der Solarpaneloberfläche aufwärts, bis ein etwa 10 bis 20 cm breiter Streifen 4 des Solarpanels 9 längs des unteren Rahmenprofils 3 komplett verschmutzt ist, sodass die Effizienz der photoelektrischen Solarzellen auf der dortigen Rückseite der Glasscheibe stark eingeschränkt ist oder sogar Null wird.

Die Figur 2 zeigt zunächst den Querschnitt der Profile 1, die herkömmlich eingesetzt werden. Es handelt sich um ein Winkelprofil 1 aus Aluminium, dessen kürzerer Schenkel 5 ca. 30mm und dessen längerer Schenkel 6 ca. 40mm breit ist. Am Ende des hier längeren Schenkels 6 ist dieser auf seiner Innenseite in eine U-förmige Nut ausgeformt. Das Solarpanel 9 passt genau in diese U-förmige Nut. Der eine Schenkel 7 der U-förmigen Nut bildet dann die Oberseite des Randes am montierten Panel 9, und der andere Schenkel 8 ist gleichzeitig in ein offene Rundnut 10 ausgeformt. Im Eckbereich des Winkelprofils ist auf dessen Innenseite eine weitere offene Rundnut 11 angeformt. Die beiden Schenkel dieser Rundnuten 10,11 sind gegeneinander elastisch verformbar, sodass eine Blechschraube längs in die Rundnuten 10,11 eingeschraubt werden kann. Dadurch können zwei derartige Profilabschnitte im rechten Winkel zueinander angeordnet miteinander verwindungsstabil verschraubt werden. Natürlich müssen die Profilenden hierzu in die Gehrung geschnitten oder sonst wie durch Ausnehmungen aufeinander passend zugeschnitten werden. Bringt man das so eingefasste Solarpanel 9 in eine Schräglage, wie es ja schliesslich montiert wird, so wird eine Rinne 20 gebildet, in welcher sich Regenwasser ansammelt.

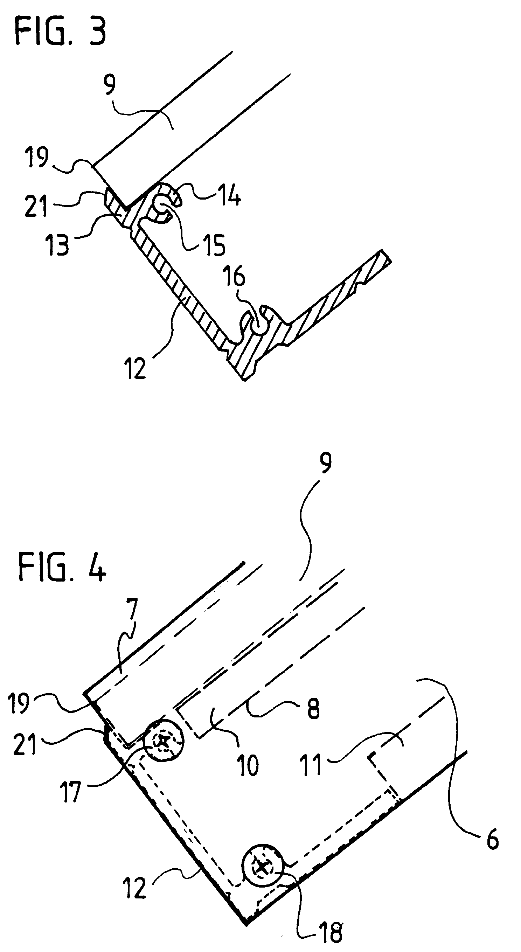

Die Figur 3 zeigt nun das erfindungsgemässe Profil 12 in einem Querschnitt, und zwar in Montagelage dargestellt, von der Seite her gesehen. Es ist im wesentlichen identisch mit dem in Figur 2 beschriebenen Profil, mit der einzigen, doch sehr wesentlichen Ausnahme, dass es keine U-förmige Nut zur Aufnahme des Solarpanelrandes aufweist, sondern an deren Stelle bloss eine L-förmige Schulter bildet, auf welche der untere Rand des Solarpanels aufgelegt wird. Der eine Schenkel 13 dieser L-förmigen Schulter erstreckt sich nur noch längs der Dicke bzw. der Stärke des Solarpanels 9 und ist kürzer oder höchstens gleichlang wie dieselbe. Im gezeigten Beispiel ist der Schenkel 13 nur etwa halb so lang wie die Stärke des Solarpanels 9, das heisst etwa 4mm lang. Ausserdem ist hier die Stirnseite des Schenkels 13 der L-förmigen Schulter abgeschrägt, sodass sie mit der Stirnseite des von ihr getragenen Solarpanels 9 einen stumpfen Winkel einschliesst. Der andere Schenkel 14 der L-förmigen Schulter ist wiederum gleichzeitig in ein offene Rundnut 15 ausgeformt. Im Eckbereich des Winkelprofils ist auf dessen Innenseite eine weitere offene Rundnut 16 angeformt. Die beiden Schenkel dieser Rundnuten 15,16 sind gegeneinander elastisch verformbar, sodass eine Blechschraube längs in die Rundnuten 15,16 eingeschraubt werden kann. Dadurch können zwei weitere oder andere Profilabschnitte im rechten Winkel zueinander angeordnet miteinander verwindungsstabil verschraubt werden. Natürlich müssen die Profilenden hierzu in die Gehrung geschnitten oder sonst wie durch Ausnehmungen aufeinander passend zugeschnitten werden. Durch die Auflage des unteren Randes des Solarpanels 9 auf diese L-förmige Schulter ist sichergestellt, dass das Regenwasser vom Solarpanel 9 über dessen untere Kante 19 restlos ablaufen kann. Es wird keine Rinne 20 mehr gebildet, in welcher etwas Regenwasser liegen bleiben könnte. Damit wird auch die schleichende Verschmutzung, wie sie bisher ein grosses Problem darstellte, zuverlässig vermieden.

In Figur 4 ist gezeigt, wie ein Profil nach Figur 2 auf die Stirnseite des neuen Profils 12 aufgeschraubt wird. Am unteren Ende des schräg abwärts verlaufenden Profilschenkels 6 sind auf dessen Innenseite die Rundnuten 10,11, bzw. deren Schenkel 8 etwas zurückversetzt, damit diese nicht auf die Rundnut-Profile am neuen Profil 12 oder auf dessen Stirnfläche selbst zu liegen kommen. Das Zurückversetzen wird durch einfaches Wegschneiden oder Wegfräsen erzielt. Das Ende des Profilschenkels 6 wird so zugeschnitten, dass es der Seitenkontur des von unten eingefassten Solarpanels 9 entspricht, wie diese aus Figur 3 zu ersehen ist. Somit wird ein sauberer Abschluss erzielt. Das Profil 6 wird auf die Stirnseite des Profils 12 aufgelegt und mittels zweier Blechschrauben 17,18 mit demselben fest verschraubt, und das unter Einfassung der zwischenliegenden Solarpanelränder.

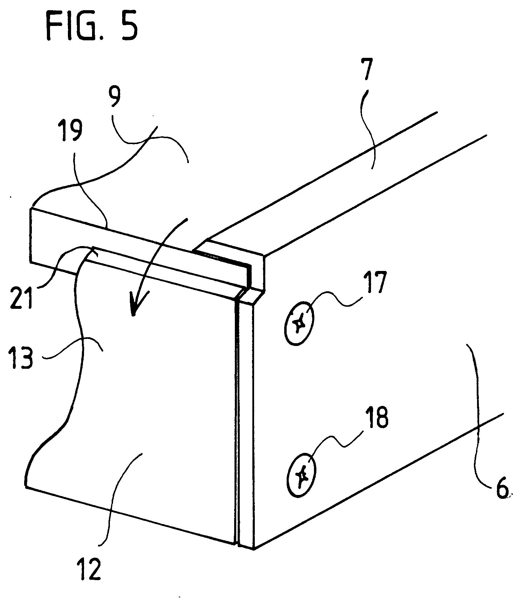

Die Figur 5 zeigt schliesslich eine in dieser Weise verschraubte Rahmenecke in einer perspektivischen Ansicht. Das Profil 12 erstreckt sich mit dem Schenkel 13 seiner L-förmigen Schulter nur bis etwa zur halben Höhe der Solarpaneldicke. Das Regenwasser kann also ungehindert über die untere Kante 19 des Solarpanels 9 abfliessen, wie das mit einem Pfeil eingezeichnet ist. Das seitliche Profil 6 ist der Kontur das unteren Abschlusses nachgeschnitten und mit den beiden Blechschrauben 17,18 verwindungsstabil mit dem Profil 12 verschraubt. Sein hier oberer Schenkel 7 der auf seiner Innenseite gebildeten U-förmigen Nut überlappt das Solarpanel 9 auf dessen Oberseite. Diese Einfassung erstreckt sich um den ganzen Solarpanelrand, ausgenommen eben den unteren Solarpanelrand, der neu frei bleibt. Es hat sich erwiesen, dass die geforderte Verwindungsstabilität mit einem derartigen Rahmen einwandfrei erreicht wird und somit weiterhin sichergestellt ist. Trotz Weglassung eines U-Schenkels kann die Durchbiegung des Solarpanels mühelos unter ¹/₇₀ der Solarpanel-Länge gehalten werden.

## Patentansprüche

1. Profil (12) zum Einfassen der unteren Seite eines Solarpanels, **dadurch gekennzeichnet, dass** es ein Winkelprofil ist, welches am Ende seines einen Schenkels eine gegen die Innenseite des Winkelprofils hin gewandte L-förmige Schulter (13,14) zum Tragen des unteren Solarpanelrandes bildet, wobei derjenige Schenkel (13) der L-förmigen Schulter, welcher an die Stirnseite des Solarpanelrandes anzuliegen bestimmt ist, kürzer oder höchstens gleichlang ist wie die Stärke des einzufassenden Solarpanels.

2. Profil nach Anspruch 1, **dadurch gekennzeichnet, dass** der zur Profilinnenseite hin gewandte Schenkel der L-förmigen Schulter auf seiner unteren Seite in eine offene Rundnut (15) ausgeformt ist, und dass im Eckbereich des Winkelprofils auf dessen Innenseite eine weitere offene Rundnut (16) angeformt ist, wobei die beiden Schenkel dieser Rundnuten (10,11) gegeneinander elastisch verformbar sind, sodass eine Blechschraube längs in diese Rundnuten (15,16) einschraubbar ist.

3. Profil nach einem der vorhergehenden Ansprüche, **dadurch gekennzeichnet, dass** die Stirnseite des Schenkels (13) der L-förmigen Schulter abgeschrägt ist, sodass sie mit der Stirnseite des zu tragenden Solarpanels (9) einen stumpfen Winkel einschliesst.

4. Rahmen zum Einfassen eines Solarpanels, dessen Rahmen-Profile (6) zum Einfassen der Seitenränder und des oberen Randes gleiche Winkelprofile sind, die an ihrem einen Schenkelende eine gegen die Innenseite des Winkelprofils hin gewandte U-förmige Nut zur Aufnahme des Solarpanelrandes aufweisen, **dadurch gekennzeichnet, dass** das Profil (12) zum Einfassen der unteren Seite des Solarpanels ein Winkelprofil ist, welches am Ende seines einen Schenkels eine gegen die Innenseite des Winkelprofils hin gewandte L-förmige Schulter zum Tragen des unteren Solarpanelrandes bildet, wobei derjenige Schenkel (13) der L-förmigen Schulter, welcher an die Stirnseite des Solarpanelrandes anzuliegen bestimmt ist, kürzer oder höchstens gleichlang ist wie die Stärke des einzufassenden Solarpanels.

5. Rahmen nach Anspruch 4, **dadurch gekennzeichnet, dass** sämtliche Profile (6,12) auf ihrer Innenseite längs angeformte, parallel zueinander verlaufende offene Rundnuten (10,11;15,16) aufweisen, wobei die beiden Schenkel dieser Rundnuten (10,11;15,16) gegeneinander elastisch verformbar sind, sodass eine Blechschraube längs in diese Rundnuten (10,11;15,16) einschraubbar ist.
